# EUROPEAN PATENT APPLICATION

(11) **EP 0 877 243 A1**
(43) Date of publication of application: **11.11.1998**
(21) Application number: 98108468.4
(22) Date of filing: 08.05.1998
(51) Int. Cl.: G01N 27/30

(54) **Material evaluation method**

(30) Priority: 10.05.1997 JP 136192/97
(71) Applicant: HORIBA, LTD., Minami-ku Kyoto (JP); Research Institute of Innovative Technology for the Earth, Soraku-gun, Kyoto 619-0225 (JP)
(72) Inventor: Nomura, Satoshi, Kissyoin, Minami-ku, Kyoto (JP); Takamatsu, Shuji, Kissyoin, Minami-ku, Kyoto (JP); Nakao, Motoi, Kissyoin, Minami-ku, Kyoto (JP)
(74) Representative: Müller, Frithjof E., Dipl.-Ing.

(57) **Abstract**

The present invention relates to a method for evaluating materials, which can evaluate the properties of various materials easily and quickly as well as accurately and reliably even if there exists only a small amount of the material. The method can display for example a pH change as a two-dimensional chemical image. The method for evaluating according to this invention provides a solution or gas (24) in contact with a sensor surface (7) on a semiconductor substrate (5). The material to be evaluated (23) is brought into contact with the solution or gas (24). Said semiconductor substrate (5) is scanned in x and y directions by a laser beam (3) and a resulting photocurrent is detected which represents subtle changes in distribution of substance concentration or property parameters induced in the solution or gas and a two dimensional image thereof is displayed.

## Description

The present invention relates to a method for evaluating various materials including organic materials such as plastics as well as inorganic materials such as cement or metal materials.

There are method for evaluating the properties of substances or materials such as uniformity, corrosion resistance, degree of coating, strength, etc., wherein a weight change of the whole material or a concentration change of a dissolved substance of the whole liquid when the material is immersed in the liquid are measured.

These measurements are all called bulk measurements, which require a certain size of lump as substance to be measured, and at the same time, when the concentration, etc. are measured, a highly sophisticated high sensitivity analysis technique is required. There also has been an inconvenience in that it takes long time to generate concentration change or weight change that can be detected by the existing analytical technique.

The present invention has been achieved with the above-mentioned matters taken into account, and it is the object of this invention to provide a method for evaluating materials that can evaluate the properties of various materials easily and quickly as well as accurately and reliably even if there exists only a small amount of material.

To solve this object the present invention provides a method as specified in claim 1. A preferred embodiment of the invention is described in claim 2.

The method for evaluating materials according to this invention is designed to provide a solution or gas in such a manner to come in contact with the sensor surface of the light scanning type two-dimensional concentration distribution measuring equipment which has a sensor surface on one surface of the semiconductor substrate and irradiates the said semiconductor substrate with the light beam, and is also designed to detect subtle changes in distribution of substance concentration or property parameters induced in the solution or gas when the material to be evaluated is mounted in such a manner to make contact with the solution or gas.

For example, when a metal material is immersed in a suitable electrolyte solution, an electrochemical reaction occurs at the portion where corrosion or depletion due to corrosion is formed, and the pH of the solution in the vicinity greatly varies as compared with other areas. It is possible to evaluate the metal material by grasping this localized change of pH. However, because the present electrochemical measuring method measures the average information of the applicable portion, it is unable to grasp the localized phenomena in detail.

There is a scanning pH electrode method for a method to measure two-dimensional distribution of pH, but it has problems of extremely slow response speed of the electrode and big restriction in time resolution or space resolution from the viewpoint of electrode size.

As against this, the material evaluation method according to this invention can detect changes of pH distribution induced in the solution by filling the cell formed with, for example, resin material with the electrolyte solution (for example, artificial seawater), holding the metal material to be evaluated in this solution with about 1 mm clearance provided from the sensor surface, inserting a counter electrode and a reference electrode in the said solution, and applying a specified bias voltage.

By the material evaluation method according to this invention, it is possible to evaluate materials more easily and more quickly than by the conventional methods. Since the various materials can be evaluated directly in conformity with the real substance, the materials can be evaluated in good accuracy and reliably.

The light scanning type two-dimensional concentration distribution measuring equipment used in the said material evaluation method may be designed to have the upper portion of the sensor surface open, but may be configured to mount a lid above the sensor surface in such a manner to cover it, to place the material to be evaluated between the lid and the sensor surface, to introduce the solution or gas to bring it in contact with the said sensor surface and the evaluated material from one side of the sensor surface, and to discharge it from the other side of the sensor surface.

Further objects, advantages and details of the invention will be apparent from the following description of preferred embodiments with reference to the drawings, wherein:
Fig. 1 is a drawing schematically showing the overall configuration of the equipment used for the material evaluation method related to a first embodiment;
Fig. 2 is an enlarged cross-sectional view showing the essential portion of the said equipment;
Fig. 3 is a drawing showing one example of the data obtained by the said material evaluation method;
Fig. 4 is a cross-sectional view schematically showing the essential portion of the equipment used for the material evaluation method related to a second embodiment;
Fig. 5 is a drawing schematically showing the overall configuration of the equipment used for the material evaluation method related to a third embodiment; and
FIG. 6 is a drawing schematically showing the overall configuration of the equipment used for the material evaluation method related to a fourth embodiment.

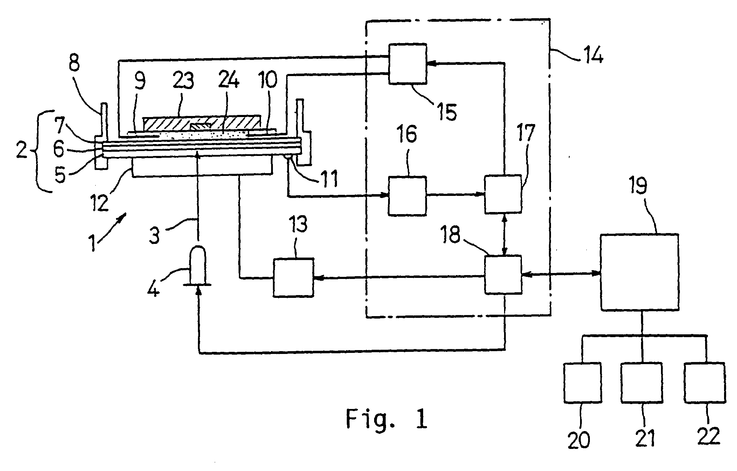

Referring now to drawings, there are shown preferred embodiments of this invention. FIG. 1 through FIG. 3 show the first embodiment. First of all, the light scanning type two-dimensional concentration distribution measuring equipment used for this material evaluation method will be described referring to FIG. 1.

In FIG. 1, numeral 1 designates a measuring equipment proper, which comprises a sensor portion 2 and a light beam irradiating portion 4 for irradiating the sensor portion with the light beam 3.

The said sensor portion 2 is built by successively forming SiO₂ layer 6 and Si₃N₄ layer 7 on one side of the surface (top surface in the illustrated example) of the substrate 5 made from a semiconductor, such as silicon, by means of the technique such as thermal oxidation, CVD, etc., and is designed to be formed to respond to the hydrogen ion. Numeral 8 is a cell which contains the sensor surface (in this case, Si₃N₄ layer 7) of the sensor portion 2, also serves as a sensor holder mounted in such a manner to face the sensor surface, is made from resin material or other suitable materials, and is configured to accommodate the solution or gel in contact with the sensor surface 7. The sensor surface 7 is measured a few cm in all directions.

Numerals 9, 10 are counter electrode and reference electrode, respectively, which are mounted in such a manner to face the sensor surface 7, and are connected to the potentiostat 15 later discussed. Numeral 11 is an ohmic electrode for taking out current signals to be mounted to the semiconductor substrate 5, and is connected to the potentiostat 15 via the current-voltage converter 16 and the operational amplifier circuit 17 later discussed.

Numeral 12 is a scanning equipment for scanning the sensor portion 2 in two-dimensional directions, that is, X direction (horizontal direction in the illustrated example) and Y direction (direction perpendicular to the paper in the illustrated example), and is controlled by the signal from the scanning controller 13.

The said beam irradiating portion 4 comprises, for example, laser beam sources, and is located on the bottom surface side (side opposite to the sensor surface 7) of the semiconductor substrate 5, and emits intermittent beam by the control signal of the computer 19 via the interface board 18 later discussed, and at the same time, is designed to irradiate the sensor portion 2 with the probe beam 3 adjusted to have a beam diameter suited for the semiconductor substrate 5 of the sensor portion 2 scanned in the two-dimensional directions by the sensor portion scanning equipment 12.

Numeral 14 is a control box for controlling the measuring equipment proper 1, and comprises a potentiostat 13 for applying suitable bias voltage to the semiconductor substrate 5, a current-voltage converter 16 for converting the current signal taken out from the ohmic electrode 11 formed in the semiconductor substrate 5 into the voltage signal, an operational amplifier circuit 17 to which signals from the current-voltage converter 16 are inputted, and an interface board 18 for transmitting and receiving signals to and from this operational amplifier circuit 17 or outputting control signals to the scanning controller 13.

Numeral 19 is a computer as controller and processing unit for carrying out various controls and computations as well as equipped with image processing capabilities, numeral 20 is an input unit such as a keyboard, numeral 21 is a display unit such as a color display, and numeral 22 is a memory unit.

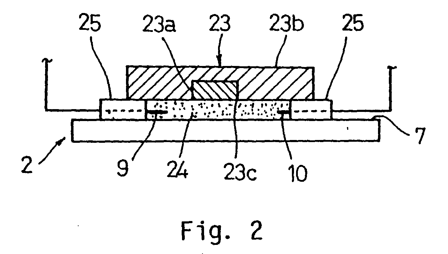

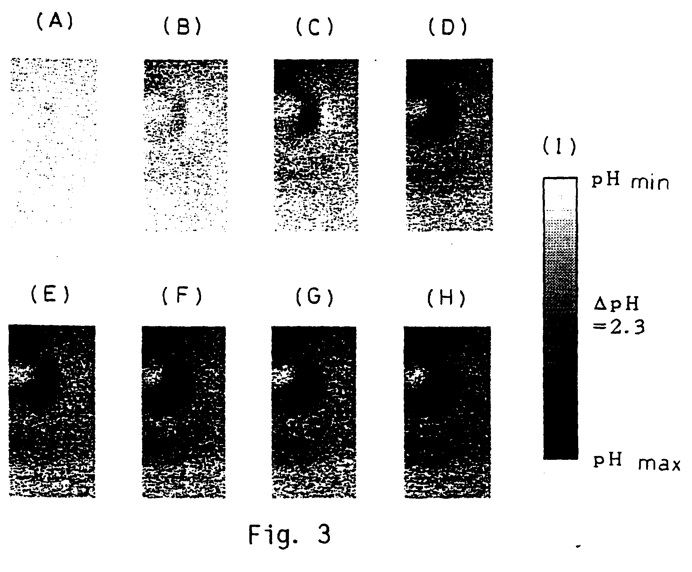

The material evaluation method using the light scanning type two-dimensional concentration distribution measuring equipment of the above configuration is described referring to FIG. 2 and FIG. 3 as well, with the measurement of corrosion formed in the vicinity of the joint between magnetic stainless steel and Ag (silver) alloy taken for an example.

In FIG. 2, numeral 23 is metal material formed by joining magnetic stainless steel and Ag (silver) alloy, numeral 23a is magnetic stainless steel and 23b Ag alloy, and both are joined together to be flush on the joint 23c side. This metal material 23 is immersed in the 0.9% physiological salt solution for, say, about 3 weeks. Numeral 24 is a gel-form agar film mounted to come in contact with the sensor surface 7, and this agar film 24 is prepared by adding 1.5% agar to the 0.9% physiological salt solution and heating and solidifying it, and its thickness is about 0.5 - 1 mm. That is, in this embodiment, the gelled solution 24 is used.

As shown in FIG. 2, the gelled solution 24 is placed on the sensor surface 7, and on this gelled solution 24, the metal material 23 is placed in such a manner that the joint 23c (portion subject to the evaluation) between magnetic stainless steel 23a and Ag alloy 23b comes in contact with the gelled solution 24. Numeral 25 is a spacer made of silicon in thickness similar to that of the gelled solution 24 and is arranged around the gelled solution 24.

When the metal material 23 is placed on the gelled solution 24 in such a manner that the lower surface side containing the portion subject to the evaluation 23c is parallel to the sensor surface 7 as described above, change in pH occurs in the gelled solution 24. This pH change can only be measured in the tiny area and is the change that can be detected by the said light scanning type two-dimensional concentration distribution measuring equipment.

That is, the counter electrode 9 and the reference electrode 10 are mounted in such a manner that they penetrate the spacer 25 and reach the gelled solution 24 and the d.c. voltage from the potentiostat 15 is applied across the reference electrode 10 and the ohmic electrode 11 so that a depletion layer is generated in the semiconductor substrate 5, and a specified bias voltage is applied to the semiconductor substrate 5. By intermittently irradiating the semiconductor substrate 5 with probe beam 3 at specified intervals (for example, 5 kHz) under this condition, a.c. photoelectric current is generated on the semiconductor substrate 5. This intermittent irradiation of light beam 3 is carried out by inputting the control signal of computer 19 via interface board 18. The said photoelectric current is the value reflecting the pH in the gelled solution 24 in contact with the sensor surface 7 at the point opposite to the irradiation point of the semiconductor substrate 5 and by measuring the value, the pH at this portion can be determined.

In addition, by moving the sensor portion 2 in X and Y directions by the sensor portion scanning equipment 12, the semiconductor substrate 5 is irradiated in such a manner that the probe beam 3 is scanned in the two-dimensional directions, and a two-dimensional image that represents the pH is displayed on the screen of the display unit 21 by the position signals (X, Y) at the gelled solution 24 and the a.c. photoelectric current observed at the spot.

The said image display is carried out, for example, in the following manner. Now, let the image size be 1 cm x 2 cm and the pixel size 100 µm; then, the pH at each measuring point (100 x 200) is arranged in correspondence with the positional coordinate of the measuring point. The arranged values are displayed as a chemical image similar to, for example, STM (scanning type tunnel microscope) image in correspondence with the gray scale or color scale.

FIG. 3 shows one example of the chemical image obtained by measuring the changes with time of the pH attributed to corrosion at the joint 23b, which is the portion subject to the evaluation of the said metal sample 23, and the pH of the background is 6.3. And image (A) in FIG. 3 shows the pH distribution in the vicinity of the joint portion 23c right after the measurement is started, and thereafter, images (B) to (H) show the pH distribution when the pH is measured at intervals of 4 to 6 minutes, while image (H) shows the condition 30 minutes after the measurement is started.

As clear from the description above, the light scanning type two-dimensional concentration distribution measuring equipment used in the material evaluation method according to this invention can accurately and quickly grasp the subtle pH change in the tiny area, and is able to image-process and display the change as a two-dimensional image on the screen of the display unit 21. Consequently, by the material evaluation method according to this invention, it is possible to evaluate the material more easily and more quickly than by the conventional methods. And since it is possible to directly evaluate the material directly in conformity with the real substance, the material can be evaluated with high accuracy and high reliability.

In the above-mentioned embodiment, the substance 24 in which the physiological salt water is gelled is placed on the sensor surface 7, but in place of this, it is allowed to store the physiological salt water in the cell 8 and bring it in contact with the sensor surface 7 and at the same time, the metal material 23 may be immersed in this physiological salt water at the portion to be evaluated. In such event, it is needless to say that the portion 23c to be evaluated of the metal material 23 must be kept away by a specified distance (for example, about 1 mm) from the sensor surface 7.

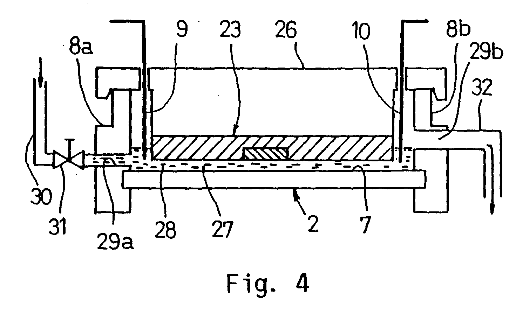

In the above-mentioned embodiment, the upper portion of the sensor surface 7 was held open, but in place of this, it may be configured as shown in FIG. 4. That is, FIG. 4 shows the second embodiment, and in FIG. 4, numeral 26 is a lid which is removably attached above the sensor surface to cover the upper portion of the sensor surface, 7, and is designed to removably hold the metal material 23, the material subject to evaluation, below it. In this event, an about 1 mm-clearance 27 should be provided between the bottom surface of the metal material 23 and the sensor surface 7.

To both side walls 8a, 8b opposite to the cell 8 erectly mounted around the sensor surface 7, inlet port 29a and outlet port 29b of the physiological salt water 28 are opened. And to the pipe 30 connected to the inlet port 29a, a switching valve 31 is mounted, the upstream side of which is connected to the psychological salt water source via a pump (not illustrated), etc. The pipe 32 connected to the outlet port 29b is connected to the discharge port.

In the embodiment shown in FIG. 4, the sensor surface 7 is covered with the lid 26 with the metal material 23 mounted, and under this condition, physiological salt water 28 is allowed to pass the clearance 27 between the bottom surface of the metal material 23 and the sensor surface 7, and after suitable time or days have passed, the flow of physiological salt water 28 is stopped, and the subtle pH change induced in the stationary physiological salt water 28 can be caught by the light scanning type two-dimensional concentration distribution measuring equipment. And according to this embodiment, pretreatment of the metal material 23 to be evaluated and pH measurement for evaluation can be carried out on the light scanning type two-dimensional concentration distribution measuring equipment, requiring only a small space for the treatment and operation and achieving easy handling.

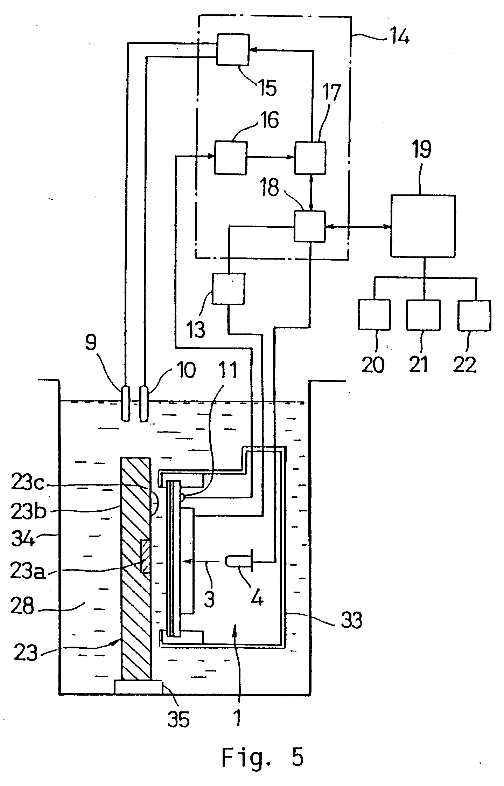

FIG. 5 shows the third embodiment according to this invention, and in the light scanning type two-dimensional concentration distribution measuring equipment, all except the sensor surface 7 of the measuring equipment proper 1 is covered with polyimide film or other insulation material 33 with excellent water repellence and insulation. And in a suitable container 34, physiological salt water 28 is contained, and in this physiological salt water 28, the metal material 23 to be evaluated is placed while held on a support 35, and the sensor surface 7 is positioned with a suitable spacing (about a few mm) left there between with respect to the evaluated surface 23c of this metal material 23 with the said measuring equipment proper 1 completely immersed in the physiological salt water 28. In this case, the counter electrode 9 and the reference electrode 10 are placed in such a manner to be immersed in the physiological salt water 28.

In the two-dimensional ion concentration measuring equipment to be used in each embodiment described above, the reference electrode RE may be omitted and bias voltage may be applied via the counter electrode CE. However, bias voltage is able to be applied more stably to the semiconductor substrate 5 when the reference electrode RE is provided.

And in place of moving the sensor portion 2 in the X and Y directions in each light scanning type two-dimensional concentration distribution measuring equipment, an optical portion scanning equipment may be installed at the beam irradiating portion 4 and the beam irradiating portion 4 may be moved in the X and Y directions, and in addition,a light bed scanning equipment may be installed between the light irradiating portion 4 and the sensor portion 2 and the probe beam 3 may be moved in the X and Y directions.

In addition, in the said light scanning type two-dimensional concentration distribution measuring equipment, the probe beam 3 by the beam irradiating portion 4 is designed to be irradiated from the side opposite to the sensor surface 7 of the semiconductor substrate 5, but in place of this, it may be irradiated from the sensor surface 7 side. And for the light irradiating portion 4, a light irradiating portion incorporated in the semiconductor substrate 5 may be adopted as shownin, for example, Japanese Patent Application No. Hei 7-39114.

Furthermore, in each of the above-mentioned embodiments, all are designed to grasp the two-dimensional distribution condition of proton (pH) and to evaluate the material 23 based on this information, but in place of this, the cell 8 is filled with other solutions, for example, KCl solution, and the two-dimensional distribution condition of the potassium ion or chloride ion contained in the solution is grasped, and based on this, the material 23 may be evaluated. In this event, the sensor surface 7 of the light scanning type two-dimensional concentration distribution measuring equipment must be modified with the substance which responds to the potassium ion or chloride ion, respectively. That is, examples of the substance responding to the potassium ion include valinomycin or crown ether, and the example of the substance responding to the chloride ion includes the quaternary ammonium salt, and the sensor surface 7 is modified with these responding substances.

However, the material evaluation method described above is to observe changes of the pH distribution in the gel 24 or the solution 28 with which the material 23 to be evaluated is brought in contact, and based on this information, the material 23 is evaluated, but the material 23 to be evaluated may be brought in contact with gas and changes of the pH distribution in this gas may be observed. Now, description will be made with this configuration as the fourth embodiment.

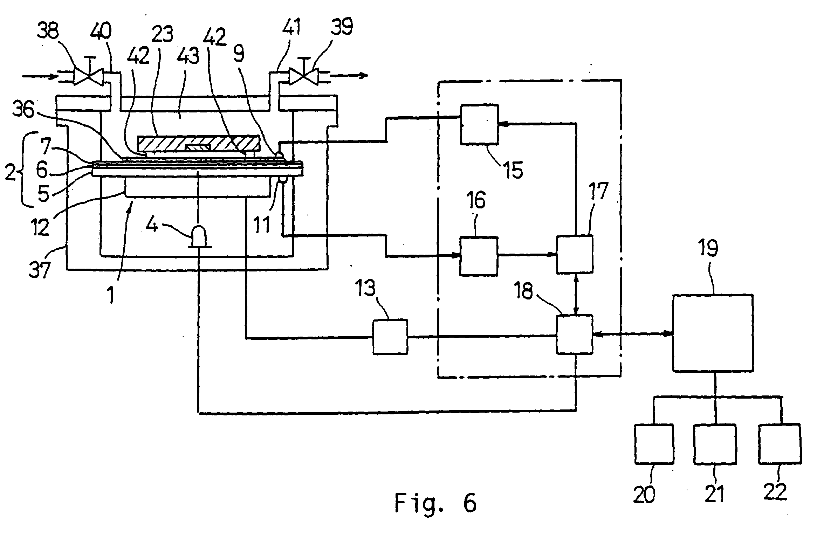

FIG. 6 shows the fourth embodiment according to this invention, and the light scanning type two-dimensional concentration distribution measuring equipment shown in FIG. 6 has a gas-sensitive film 36 formed as the gas sensor surface comprising SnO₂ (tin oxide) or Pd (palladium) on the top of the sensor surface 7 of the measuring equipment proper 1, and to this gas-sensitive film 36, the counter electrode 9 is connected. In this case, the reference electrode 10 is not installed. And the measuring equipment proper 1 is contained in the hermetically sealed gas chamber 37. To this gas chamber 37, gas introducing pipes 40, 41 equipped with the switching valve 38, 39 equipped, respectively, are connected, and the gas introducing pipe 40 is connected to the gas supplying source not illustrated and the gas discharging pipe 41 is connected to the discharge port not illustrated.

To carry out evaluation of, for example, the said metal material 23 using the light scanning type two-dimensional concentration distribution measuring equipment of the above-mentioned configuration, spacers 42 ride of silicon are arranged at suitable intervals on the top surface of the gas-sensitive film 36, and the metal material 23 is held in parallel with an about 1 mm-clearance provided from the gas-sensitive film 36. The switching valve 38 on the gas introducing side is opened and the switching valve 39 on the gas discharging side is closed to supply either gas 43 of, for example, HCl (hydrogen chloride), H₂ (hydrogen gas), or N₂ (nitrogen gas) to fill the gas chamber 37, and the switching valve 38 is closed. This gas 43 comes in contact with the surface 23c subject to evaluation of the metal material 23 and the gas-sensitive film 36, and changes occur in the gas concentration.

The said changes of the gas concentration are detected by the gas-sensitive film 36, and the two-dimensional distribution of the gas concentration is able to be obtained by irradiating the semiconductor substrate 5 with the light bed 3 and taking out the signals corresponding to the gas concentration.

By the way, in the above-mentioned fourth embodiment, when the gas-sensitive film 36 is formed, the sensor surface 7 may be omitted and the gas-sensitive film 36 may be directly formed on the top surface of the SiO₂ film 6.

In addition, in the light scanning type two-dimensional concentration distribution measuring equipment of the fourth embodiment as well, in place of moving the sensor portion 2 in the X and Y directions, a light irradiating portion scanning equipment is installed at the beam irradiating portion 4 and the light irradiating portion 4 may be moved in the X and Y directions, or a probe beam scanning equipment may be installed between the beam irradiating portion 4 and the sensor portion 2 and the probe beam 3 may be moved in the X and Y directions.

Furthermore, in the above-mentioned light scanning type two-dimensional concentration distribution measuring equipment, the probe beam 3 by the beam irradiating portion 4 is designed to be irradiated from the side opposite to the sensor surface 7 of the semiconductor substrate 5, but in place of this configuration, it may be irradiated from the side of the sensor surface 7. And for the light irradiating portion 4, a light irradiating portion incorporated in the semiconductor substrate 5 may be adopted as shown, for example, in the Japanese Patent Application No. Hei 7-39114.

And in the above-mentioned embodiment, changes of the two-dimensional distribution of ion concentration or gas concentration are designed to be detected, but the material evaluation method according to this invention is not limited to this but may be designed to detect the changes in distribution of compound concentration or further characteristic parameters such as oxidation-reduction potential.

The material evaluation method according to this invention can be applied not only to the evaluation of the above metal material but also to the evaluation of properties of bio-liquid of artifical bone material, corrosion resistance of fitting for dentures, the degree of coating of the coating material, penetration characteristics of artificial film, ion exchangers, and other wide range of metal materials, organic materials, and inorganic materials.

According to the material evaluation method of this invention, it is possible to evaluate various materials more easily and more quickly than in the conventional methods. And since it is possible to evaluate various materials directly in conformity with the real substance, the material can be evaluated with high accuracy and high reliability. In addition, the material evaluation method of this invention requires only a small amount of the specimens and provides excellent reproducibility.

## Claims

1. The method for evaluating materials (23) comprising the steps of providing a solution (24) or gas in such a manner as to come in contact with a sensor surface (7) of a light scanning type two-dimensional concentration distribution measuring equipment (1) which has the sensor surface (7) on one surface of a semiconductor substrate (5) and irradiates the said semiconductor substrate (5) with a light beam (3), and detecting subtile changes in distribution of substance concentration or property parameters induced in the solution or gas when the material (23) to be evaluated is mounted in such a manner so that it is brought into contact with the solution (24) or gas.

2. The method for evaluating materials (23) as set forth in claim 1, in which, the light scanning type two-dimensional concentration distribution measuring equipment (1) is constructed to mount a lid (26) above the sensor surface (7) in such a manner to cover it, to place the material (23) to be evaluated between the lid (26) and the sensor surface (7), to introduce the solution or gas to bring it in contact with the said sensor surface (7) and the evaluated material from one side of the sensor surface (7), and to discharge it from the other side of the sensor surface (7).
